# EUROPÄISCHE PATENTSCHRIFT

(11) **EP 3 581 265 B1**
(45) Veröffentlichungstag und Bekanntmachung des Hinweises auf die Patenterteilung: **04.12.2024**
(21) Anmeldenummer: 18177289.8
(22) Anmeldetag: 12.06.2018
(51) Int. Cl.: B01J 2/16, B05B 7/06, B05B 7/10, C05C 9/00

(54) **SPRÜHDÜSE ZUR HERSTELLUNG EINES HARNSTOFF-SCHWEFEL DÜNGERS**
SPRAY NOZZLE FOR PRODUCING A UREA-SULFUR FERTILIZER
BUSE DE PULVÉRISATION DESTINÉE À LA FABRICATION D'UN ENGRAIS D'URÉE SOUFRÉE

(43) Veröffentlichungstag der Anmeldung: 18.12.2019
(73) Patentinhaber: thyssenkrupp Fertilizer Technology GmbH, 44141 Dortmund (DE); thyssenkrupp AG, 45143 Essen (DE)
(72) Erfinder: Potthoff, Dr. Matthias, 44265 Dortmund (DE); Franzrahe, Dr. Harald, 44289 Dortmund (DE); Krawczyk, Thomas, 42117 Wuppertal (DE); Vanmarcke, Luc Albert, 9971 Lembecke (BE)
(74) Vertreter: thyssenkrupp Intellectual Property GmbH

(56) Entgegenhaltungen:
- EP-A1- 0 900 589
- EP-B1- 0 900 589
- WO-A1-2005/061118
- JP-A- 2003 103 203
- US-A- 3 100 698
- US-A1- 2007 200 007
- US-A1- 2008 305 420
- US-A1- 2018 117 554

## Beschreibung

Die Erfindung betrifft eine Sprühdüse zur Herstellung eines Harnstoff-Schwefel Düngers, einen Fließbett Granulator mit einer Sprühdüse zur Herstellung eines Harnstoff-Schwefel Düngers, ein Verfahren zur Herstellung eines Harnstoff-Schwefel Düngers und die Verwendung der Sprühdüse zur Herstellung eines Düngergranulates.

Im Hinblick auf das weltweite Bevölkerungswachstum kommt der Entwicklung von flexiblen und effizienten Düngermischungen eine große und wachsende Bedeutung zu. Dabei spielt nicht nur der Dünger selbst, d.h. die chemische Zusammensetzung, eine Rolle, sondern auch die Verarbeitungen in transportfähige Gebinde. Die größte Bedeutung kommt hierbei sicherlich der Granulierung zu gleichmäßigen, in Größe und Beschaffenheit gleichen Partikeln, zu. Wichtige Parameter sind hierbei geringe Staubbildung, Festigkeit, niedrige Aggregationstendenz, homogene Größe, Lagerfähigkeit und Beständigkeit. Eine etablierte Granulationstechnik ist die Fließbettgranulation, welche gegenüber beispielsweise den Prilltechniken, verbesserte Partikeleigenschaften aufweist. Ein Beispiel zur Herstellung eines Harnstoffhaltigen Düngergranulates mittels Fließbett Granulation findet sich in der WO 2010/060535 A1, z.B. in den Paragraphen [0025]-[0035].

Der Einsatz von Harnstoff-Schwefel Dünger in der Landwirtschaft ist schon seit längerer Zeit bekannt. In derartigen Düngermischungen können der Pflanze beide Elemente Stickstoff und Schwefel gleichzeitig bereitgestellt werden, so dass Schritte und Kosten zur Ausbringung eines weiteren Düngers eingespart werden können. Schwefel kann dabei sowohl in elementarer Form als auch in wasserlöslicher Form, beispielsweise als Sulfat, vorliegen. Die wasserlösliche Schwefelform kann von der Pflanze direkt aufgenommen werden, während der elementare Schwefel erst von Mikroorganismen im Boden in die wasserlösliche Form umgewandelt werden muss. Dieser Umwandlungsprozess beinhaltet somit eine Art "Depot-Wirkung", so dass der Schwefel langsam über einen längeren Zeitraum an die Pflanze abgegeben wird. Auf diese Art und Weise ist eine gezielte und gesteuerte Schwefelabgabe, beispielsweise durch Mischungen von Sulfat und elementaren Schwefel möglich. In Kombination mit Harnstoff ermöglicht dies beispielsweise eine Versorgung der ausgesäten Pflanzen im frühen Stadium mit Stickstoff über den Harnstoff und mit Schwefel in den anschließenden Wachstumsphasen.

Aus diesem Grund kommen Harnstoff-Schwefeldünger mit einer homogenen Versteilung von Harnstoff und Schwefel eine zunehmend größere Bedeutung zu. Beispiele finden sich z.B. in der US 4,330,319 A.

Um eine gute biologische Abbaubarkeit des elementaren Schwefels im Boden zu gewährleisten, sind möglichst kleine Partikel notwendig. Diese kleinen Partikel weisen im Gegensatz zu größeren Partikeln eine im Verhältnis zum Volumen größere Oberfläche auf. Diese größere Oberfläche, insbesondere die größere spezifische Oberfläche (beispielswiese bestimmbar nach der BET-Methode, z.B. nach DIN-ISO 9277) verbessert die Zugänglichkeit des elementaren Schwefels für im Boden befindliche Mikroorganismen.

Da Schmelzen von elementareren Schwefel und Harnstoff, insbesondere aufgrund ihrer unterschiedlichen Dichte und Viskosität, nur schlecht mischbar sind, kommen Harnstoff-Schwefeldünger häufig in Form von schwefelbeschichteten Harnstoffpartikeln in den Handel. Möglich sind auch beispielsweise polymer-schwefelbeschichte Harnstoff Partikel. Die Beschichtung der Harnstoffpartikel mit Schwefel ist jedoch ein recht aufwendiger Prozess, zudem sind die Abgaberaten sowohl in Bezug auf den Schwefel als auch den Harnstoff im Boden nur schwer vorhersehbar und reproduzierbar. Zudem können beschichtete Harnstoffpartikel häufig eine deutlich größere Partikelgröße aufweisen, was sich wie voranstehend beschrieben, negativ auf die gleichmäßige Zersetzung des elementaren Schwefels auswirkt. Untersuchungen (Effect of particle size o the oxidation of elemental sulfur"; C.C: Boswell et al; New Zealand J. of Agricultural Res; 1988, 31, 179-186) haben ergeben, dass Partikelgrößen von 10 µm bis 150 µm, insbesondere 10 µm bis 38 µm bevorzugt sind.

Aufgrund der erwähnten schlechten Mischbarkeit von Harnstoff und elementaren Schwefel kommen vielfach Mischungsapparate, wie Mixer zum Einsatz. Diese erfordern jedoch zusätzliche apparative Komponenten, beispielsweise statische Mischer. Diese zusätzlichen Verfahrensschritte erhöhen zudem zwangsläufig die Kosten des Verfahrens. Ein weiterer Ansatzpunkt sind Mischungsadditive. Diese verbessern die Mischbarkeit der Komponenten, beispielsweise durch die Verringerung der Oberflächenspannung von Schwefel und Harnstoff in der Schmelze.

Gleichzeitig verändern jedoch weitere Additive die Eigenschaften des fertigen Granulates und erhöhen die Kosten des fertigen Produktes.

Die US 3,100,698 A offenbart einen Harnstoff-Schwefel Dünger und dessen Herstellung aus einer Harnstoff- und Schwefelschmelze, Mischung der Schmelzen und Erhalt der festen Partikel, beispielsweise über ein Prillverfahren.

Die WO 03/106376 A1 offenbart ein Verfahren zur Herstellung eines Harnstoff-Schwefel Düngers bei dem ein, in Bezug auf die Mischung von Schwefel und Harnstoff, amphoteres Additiv hinzugegeben wird. Beispiele für geeignete Tenside sind C₆₋₃₀-Fettsäuren, vorzugsweise Myristinsäure.

Die WO 2014/005695 A1 offenbart einen Prozess zur Herstellung einer Emulsion aus elementaren Schwefelpartikeln. Durch Zugabe eines multifunktionalen Tensides können Harnstoff-Schwefel Dünger erhalten werden.

Die WO 2015/104296 A1 offenbart eine Düngerzusammensetzung umfassend Harnstoff, Schwefel und eine Lignin Verbindung.

Weitere Beispiele eines homogen verteilten Harnstoff-Schwefeldüngers und Verfahren zu dessen Herstellung finden sich in den WO 2015/104286 A1 und WO2016/016150 A1.

Die WO 2005/061118 A1 offenbart eine Sprühdüse für die Fließbettgranulation. Diese Düse beinhaltet eine Mischung des Atomisierungsmediums mit der Schmelze in der Düse.

Die WO 2017/005695 A1 offenbart ein Verfahren zur Herstellung eines partikulären Düngers auf Basis von elementaren Schwefel und Harnstoff. Das offenbarte Verfahren kommt ohne den Einsatz von zusätzlichen Additiven zur Herstellung der Schwefel/Harnstoff Mischung aus.

Die JP 2003 103 203 A offenbart eine Zwei-Fluid-Sprühdüse mit einem ersten Strömungsweg zum Einleiten des ersten Fluids, ein Material im flüssigen Zustand, in einen am Kopfende geöffneten Teil und einen zweiten Strömungsweg zum Einleiten eines zweiten Fluids (Druckluft) in den am Kopfende geöffneten Teil.

Die vorliegende Erfindung hat die Aufgabe eine Sprühdüse zur Herstellung eines verbesserten homogen verteilten Harnstoff- /Schwefeldüngergranulats bereitzustellen, welche eine Verfahrensführung ohne zusätzliche Mischungsschritte oder Additive erlaubt, beziehungsweise den Einsatz weiterer Mischungsschritte oder Additive verringert.

Die Aufgabe der Erfindung wird überraschenderweise durch eine Sprühdüse gemäß Anspruch 1 gelöst. Weitere vorteilhafte Ausgestaltungen finden sich in den abhängigen Ansprüchen.

Die Erfindung umfasst des Weiteren einen Fließbett Granulator mit einer Sprühdüse zur Herstellung eines Harnstoff Düngergranulats und/oder Harnstoff-Schwefel Düngergranulats, ein Verfahren zur Herstellung eines Harnstoff-Schwefel Düngers und die Verwendung der Sprühdüse zur Herstellung eines Düngergranulates. Weitere vorteilhafte Ausgestaltungen finden sich in den jeweiligen abhängigen Ansprüchen.

Die erfindungsgemäße Sprühdüse zur Herstellung eines Harnstoff Düngergranulats und/oder Harnstoff-Schwefel Düngers umfasst mindestens einen Förderkanal und einen Atomisierungsgaskanal. Die Sprühdüse enthält bzw. ist bevorzugt aus Metallen und/oder Metalllegierungen aufgebaut, besonders bevorzugt korrosionsbeständige Metalle und/Metalllegierungen, insbesondere bevorzugt Edelstähle. Geeignete Metalle/Metalllegierungen umfassen beispielsweise Eisen, Chrom, Vanadium, Nickel, Titan, Aluminium, Kobalt, Wolfram gefertigt. Die erfindungsgemäße Sprühdüse kann auch temperaturbeständige (> 100 °C) Polymere oder Keramiken enthalten. Optional kann die Sprühdüse, insbesondere im Bereich des Förderkanals korrosionshemmende Beschichtungen, beispielsweise Polytetrafluorethylen aufweisen. Die Sprühdüse ist dadurch gekennzeichnet, dass der Förderkanal mindestens ein Trennstift aufweist und der Atomisierungskanal mindestens ein Verwirbelungselement aufweist.

Der Trennstift ist erfindungsgemäß als einzelner oder einfach oder mehrfach überkreuzender Steg ausgeführt. Der Trennstift ermöglicht in Fließrichtung der Schmelze eine Auftrennung der Schmelze am Trennstift. Der Ausdruck "Schmelze" umfasst im Sinne der Erfindung Salzschmelzen, Salz und/oder Feststofflösungen, Dispersionen und/oder Gemische davon. Bevorzugt umfasst der Ausdruck "Schmelze" im Sinne der Erfindung Harnstofflösungen, Lösungen/Emulsionen/Dispersionen mit Schwefelsalzen und/oder Dispersionen oder Lösungen mit elementarem Schwefel, bevorzugt einzeln oder in Summe mit mehr als 50 Gew. % Harnstoff, Schwefel und/oder Schwefelsalzen. In Fließrichtung der Schmelze erfolgt hinter dem Trennstift eine erneute Vereinigung der Schmelze. Diese Auftrennung und Vereinigung der Schmelze ermöglicht eine bessere Homogenisierung und Durchmischung der Schmelze. Der Trennstift ist bevorzugt fest im Förderkanal angebracht, alternativ ist auch eine bewegliche Anordnung, beispielsweise analog einer im Förderkanal angebrachten Schraube, möglich. Der Trennstift umfasst bevorzugt Metalle, Metalllegierungen, Glassteine, Keramiken, oder temperaturstabile (größer 100°C bis ca. 200 °C) Polymere.

Der Atomisierungskanal weist mindestens ein Verwirbelungselement auf und stellt den zur Herstellung der atomisierten Schmelztröpfchen oder Lösungströpfchen notwenigen Gasstrom, bevorzugt Luftstrom, bereit. Der Ausdruck "atomisieren" bezieht sich im Sinne der Erfindung auf feine im Gasstrom dispergierte Schmelze- oder Lösungströpfchen. Der Ausdruck "atomisiert" bezieht sich im Sinne der Erfindung nicht auf die Trennung molekularer Bindungen oder das Vorliegen einzelner Atome. Die Verwirbelungselemente erlauben ein Aufteilen (Splitten) eines Atomisierungsgases, beispielsweise Luft, in verschiedene Sekundärströme und Turbolenzen. Die Verwirbelungselemente können in Form von Aussparungen, Fortsätzen, im Atomisierungskanal angebrachte Elemente sein. Verwirbelungselemente umfassen im Sinne der Erfindung im Atomisierungskanal angebrachte oder angeordnete Elemente welche eine Umlenkung oder Teilung des Atomisierungsgases erzeugen und den turbulenten Anteil des Atomisierungsgases im Atomisierungskanal erhöhen. Die Verwirbelungselemente ermöglichen somit überraschenderweise eine ausreichende Bildung von Mikrotropfen der Schmelze. Überraschenderweise wurde durch die erfindungsgemäße Sprühdüse bereits eine Schwefel Partikelgröße von unter 30 µm erreicht, ohne das weitere emulgierende Zusätze in Harnstoff-/Schwefelschmelze erforderlich waren. Die Verwirbelungselemente können bevorzugt Teil des Atomisierungskanals sein oder eingebrachte Elemente umfassend Metalle, Metalllegierungen, Glassteine, Keramiken, oder Polymere. Beide Mittel Trennstift und Verwirbelungselemente erlauben überraschenderweise bevorzugt eine Schwefelpartikelgröße von unter 30 µm im fertigen Harnstoff-Schwefeldüngemittelkorn zu erhalten und die Schwefelpartikel dabei homogen im Harnstoff, beispielsweise der Harnstoffmatrix zu verteilen. Die erfindungsgemäße Sprühdüse ermöglicht zudem bevorzugt die Einsparung weiterer Rührvorrichtungen, beispielsweise Mixer.

Die sich kreuzenden Trennstifte ermöglichen eine sehr homogene Durchmischung der Schmelze.

Erfindungsgemäß weisen die Verwirbelungselemente feste Elemente auf Erfindungsgemäß bilden der Förderkanal und der Atomisierungsgaskanal plan zu einander eine gemeinsame Austrittsöffnung. Die Durchmischung des Atomisierungsgases und den Tröpfchen der Schmelze findet somit außerhalb der Düse und somit nicht in einer Mischkammer innerhalb der Düse statt. Dies ermöglicht eine sehr gleichmäßige und einheitliche Durchmischung zwischen Schmelze und Atomisierungsgas.

Die Erfindung umfasst des Weiteren einen Fließbett Granulator umfassend mindestens eine auf, an und/oder oberhalb einer perforierten Platte angeordnete, erfindungsgemäße Sprühdüse. Die erfindungsgemäße Sprühdüse zur Herstellung eines Harnstoff-Schwefel Düngers umfasst mindestens einen Förderkanal und einen Atomisierungsgaskanal. Die Sprühdüse ist dadurch gekennzeichnet, dass der Förderkanal mindestens ein Trennstift aufweist und der Atomisierungskanal mindestens ein Verwirbelungselement aufweist. Die Sprühdüse und die bevorzugten Ausgestaltungen der Sprühdüse entsprechen der voranstehend beschriebenen. Ein beispielhafter Aufbau eines Fließbett Granulator, beispielsweise zur Herstellung Harnstoffhaltiger Partikel, findet sich in der in der WO 2010/060535 A1, z.B. in den Paragraphen [0025]-[0035], Figur 1 oder der US 4,701,353 A, DE 31 16 778A1 und US 4,219,589 A. Der Fließbett Granulator weißt bevorzugt mindestens einen Granulatorraum, eine im Granulatorraum angeordnete perforierte Plate und in/auf der perforierten Platte angeordnete erfindungsgemäße Sprühdüsen auf. Die erfindungsgemäßen Sprühdüsen sind bevorzugt mit Zuleitungen für Schmelze aus Harnstoff und Schwefel sowie einer Zuleitung für das Atomisierungsgas verbunden. Der Ausdruck "Atomisierungsgas" bezieht sich im Sinne der Erfindung auf ein Gas zur Verwirbelung, Emulgierung und Dispergierung der Schmelze bzw. Lösung, bevorzugt aus Harnstoff und Schwefel. Das sich im Granulator befindliche Fließbett steht mit einem fluidisierenden Gasstrom, bevorzugt Luft in Verbindung. Die im Fließbett befindlichen Saatkörner wachsen durch Kontakt mit den im Atomisierungsmedium erzeugten Schmelztröpfchen an. Die fertigen Partikel werden anschließend im Granulator oder im separaten Kühler gekühlt und dem weiteren Prozess, beispielsweise Siebung, Nachbehandlung und Verpackung zugeführt.

Die Erfindung umfasst des Weiteren ein Verfahren zur Herstellung eines Harnstoff-Schwefel Düngers. Das erfindungsgemäße Verfahren umfasst mindestens die folgenden Schritte, Bereitstellen einer Schmelze enthaltend Harnstoff und elementaren Schwefel, Einsprühen der Schmelze und Atomisierungsgas in einen Fließbett Granulator mit einer Sprühdüse und Erhalten von Granulat in dem Fließbett Granulator. Sollen sauerstoffempfindliche Granulate erzeugt werden, können anstatt Luft bzw. ergänzend auch Gase/Gasgemische aus Edelgasen, insbesondere Argon, Stickstoff oder Kohlendioxid als Atomisierungsgas verwendet werden. Die im Verfahren verwendete Sprühdüse ist dadurch gekennzeichnet, dass die Sprühdüse mindestens einen Förderkanal und einen Atomisierungsgaskanal aufweist. Des Weiteren weißt der Förderkanal mindestens ein Trennstift auf und der Atomisierungskanal mindestens ein Verwirbelungselement auf. Die Sprühdüse und die bevorzugten Ausgestaltungen der Sprühdüse entsprechen der voranstehend beschriebenen.

In einer bevorzugten Ausführungsform des Verfahrens wird die Sprühdüse im Temperaturbereich von 1°C bis 10°C, bevorzugt 2°C bis 5 °C über der Kristallisationstemperatur der Schmelze temperiert. Der voranstehende Temperaturbereich ermöglicht eine Ausbringung der Schmelze mit entsprechender Viskosität und Fließgeschwindigkeit.

Bevorzugt wird die Schmelze über den Förderkanalkanal mit einem Druck von 0,5 bar bis 7 bar eingeleitet. Alle verwendeten Druckangaben beziehen sich auf den Überdruck in bar über den Atmosphärendruck.

Bevorzugt wird die Schmelze über den Förderkanalkanal mit einer Flussrate von 50 kg/h bis 600 kg/h eingeleitet.

In einer weiteren bevorzugten Ausführungsform wird das Atomisierungsgas über den Atomisierungskanal mit einem Flussrate von 100 kg/h bis 400 kg/h eingeleitet.

Bevorzugt wird das Atomisierungsgas über den Atomisierungskanal mit einem Druck von 0,1 bar bis 2 bar eingeleitet

Bevorzugt wird die die Schmelze durch kontinuierliche Mischung einer harnstoffhaltigen Schmelze und einer elementaren Schwefel haltigen Schmelze erhalten. Mischungsadditive, welche beispielsweise die Grenzflächenspannung, Viskositäts- und/oder Dichteunterschiede zwischen der Harnstoffschmelze und der Schwefelschmelze herabsetzen sind im erfindungsgemäßen Verfahren entbehrlich.

In einer bevorzugten Ausführungsform enthält das Granulat 2 Gew.% bis 30 Gew.% Schwefel, bevorzugt 5 Gew.% bis 20 Gew.% Schwefel. Der endgültige Schwefelanteil ist aber im Rahmen der Vorgaben zum finalen Düngergranulat auch über den vorbeschriebenen Bereich variierbar.

In einer alternativen, bevorzugten Ausführungsform enthält die die Schmelze ein im Verhältnis zu Harnstoff und elementaren Schwefel amphiphiles Additiv. Der Ausdruck "amphiphil" beschreibt ein Additiv, welches chemisch/physikalische strukturelle Merkmale aufweist, welche eine gute Löslichkeit sowohl in der Harnstoffschmelze als auch in der Schwefelschmelze ermöglichen. Im Übrigen wird der Begriff "amphiphil" analog seiner Verwendung bei Waschmitteln und Tensiden für Öl/Wasser Gemische verwendet. Neben der Löslichkeit ermöglicht das Additiv beispielsweise die Herabsetzung der Grenzflächenspannung sowie der Viskositäts- und/oder Dichteunterschiede zwischen der Harnstoffschmelze und der Schwefelschmelze.

Bevorzugt umfasst das amphiphile Additiv anionische, kationische oder nichtionische Tenside, bevorzugt Salze und Ester von Fettsäuren, SDS (Sodium dodecylsulfat), AOT (Dioctyl sodium sulfosuccinate), Lignin und/oder Ligninsulfonate und/oder Mischungen oder Derivate davon.

Bevorzugt enthält die die Schmelze einen Granulierhilfsstoff, besonders bevorzugt Formaldehyd oder ein formaldehydfreies Granulieradditiv. Der Granulierhilfsstoff verringert die Staubildung, erhöht die Festigkeit und verringert die Verklebungstendenz ("verbacken" oder "caking") des Granulats.

Bevorzugt enthält das formaldehydfreie Granulieradditiv eine Kombination aus wenigstens einem Amino-Gruppen enthaltenden Polymer oder Oligomer und wenigstens einer funktionalisierten Polyvinylverbindung, besonders bevorzugt eine Kombination aus Polyethylenimin und Polyvinylalkohol. Erfindungsgemäß zum Einsatz kommende Amino-Gruppen enthaltende Polymere und Oligomere umfassen insbesondere Polymere und Oligomere mit einem Molekulargewicht (MW) von 250 bis 2,000,000, Dalton. Beispielsweise kommen als Amino-Gruppen enthaltende Polymere und Oligomere Polyamine, polymere Polyamine, Stickstoff-substituierte Vinylpolymere, Polyoxazoline, Polypropylenimin und dessen Dendrimere, Polyethylenimin und dessen Dendrimere, Polyamidoamin und dessen Dendrimere, sowie Copolymere und Derivate und Kombinationen aus zwei oder mehr der genannten Substanzen in Betracht.

Bevorzugte Amino-Gruppen enthaltende Polymere und Oligomere umfassen Polyamine und polymere Polyamine, Polyalkylenimine wie z.B. Polyethylenimine und Polypropylenimine, Polyvinylamine, polyalkoxylierte Polyamine, ethoxylierte Polyamine, propoxylierte Polyamine, alkylierte und benzylierte Polyamine sowie Kombinationen aus zwei oder mehr der vorstehend genannten Komponenten.

Ganz besonders bevorzugt kommen als Amino-Gruppen enthaltende Polymere und Oligomere Polyethylenimine, Polyethylenimin Dendrimere, sowie deren Copolymere, Derivate und Mischungen aus wenigstens zwei dieser Komponenten zum Einsatz.

Geeignete Polyethylenimine können lineare oder verzweigte Polyethylenimin Polymere oder Oligomere umfassen mit beispielsweise 10 oder mehr Monomer-Einheiten sowie deren Derivate, Analoga, Copolymere und Mischungen aus wenigstens zwei dieser Komponenten.

Polyethylenimine können durch die Polymerisation von Ethylenimin erhalten werden und sind käuflich am Markt erhältlich, beispielsweise in Form der Lupasol^{®} und Epomin^{®} Produktfamilien und hier insbesondere der Produkte Lupasol^{®} G20, Lupasol^{®} FG, Lupasol^{®} G35, Lupasol^{®} P, und Lupasol^{®}1595 (die Lupasol^{®} Produkte sind erhältlich von der BASF (Florham Park, NJ, USA)), sowie Epomin^{®} SP-003, Epomin^{®} SP-006, Epomin^{®} SP-012, Epomin^{®} SP-018, Epomin^{®} SP-200, Epomin^{®} SP-1000, und Epomin^{®} SP-1050 (die Epomin^{®} Produkte sind erhältlich von Nippon Shokubai (Osaka, Japan)).

Als funktionalisierte Polyvinylverbindungen kommen erfindungsgemäß insbesondere Verbindungen basierend auf der Wiederholeinheit (CH_{X}CH_{Y})n in Betracht, worin X ausgewählt ist aus der Gruppe bestehend aus H, NH₂, OH, COOH, COR, CONH₂, CH₂NH₂, CH₂NHR, CH₂OH und CH₂OR und Y ausgewählt ist aus der Gruppe bestehend aus NH₂, OH, COOH, COR, CONH₂, CH₂NH₂, CH₂NHR, CH₂OH und CH₂OR und wobei R jeweils unabhängig voneinander für Alkyl, insbesondere C1-6-Alkyl, oder Aryl, insbesondere für Phenyl oder Pyridyl stehen kann, welches unsubstituiert oder ggf. mit 1, 2, 3, 4 oder 5 Substituenten unabhängig voneinander ausgewählt aus der Gruppe bestehend aus F, CI, Br, CF3, C1-6-Alkyl, C1-6-Alkoxy, NH2, C1-6-Alkyl, Amino und Di(C1-6-Alkyl)amino substituiert sein kann.

Als funktionalisierte Polyvinylverbindung kommt bevorzugt Polyvinylalkohol oder Polyvinylamin oder deren Mischung in Betracht. Besonders bevorzugt ist die funktionalisierte Polyvinylverbindung ein Polyvinylamin.

Das Polyvinylamin und der Polyvinylalkohol können jeweils bevorzugt ein Molekulargewicht (MG) von 500 bis 1,000,000, Dalton aufweisen.

Geeignete Polyvinylamine umfassen insbesondere lineare Polymere und Copolymere, die sich von Vinylformamid-Monomeren ableiten und kationische und anionische Polyvinylamin-Copolymere sowie geladene und protonierte Polyvinylamine umfassen können.

Geeignete Polyvinylamine sind käuflich am Markt erhältlich, beispielsweise solche der Lupamin^{®} Produktfamilie und hier insbesondere die Produkte Lupamin^{®} 1595, Lupamin^{®} 4500, Lupamin^{®} 5095, Lupamin^{®} 9030, Lupamin^{®} 9050 und Lupamin^{®} 9095. Beispiele kationischer und anionischer Polyvinylamin-Copolymere sind solche der Luredur^{®} Produktfamilie und hier insbesondere die Produkte Luredur^{®} Am na, Luredur^{®} AV, Luredur^{®} VH, Luredur^{®}VI, Luredur^{®}VM, Luredur^{®} PR8094, Luredur^{®} PR8261, und Luredur^{®} PR8349. Beispiele geladener oder protonierter Polyvinylamine sind Produkte der Catiofast^{®} Produktreihe und hier insbesondere die Produkte Catiofast^{®} GM, Catiofast^{®} PL, Catiofast^{®} PR8236, Catiofast^{®} VCB, Catiofast^{®} VFH, Catiofast^{®} VLW, Catiofast^{®} VMP und Catiofast^{®} VSH. Die Lupamin^{®}, Luredur^{®}, und Catiofast^{®} Produkte sind erhältlich von der BASF (Florham Park, NJ, USA).

Bevorzugt enthält das formaldehydfreie Granulieradditiv mindestens:
- eine Kombination aus wenigstens einem Amino-Gruppen enthaltenden Polymer oder Oligomer und wenigstens einer funktionalisierten Polyvinylverbindung enthält, bevorzugt eine Kombination aus Polyethylenimin und Polyvinylalkohol und/oder
- eine Verbindung ausgewählt aus der Gruppe der aliphatischen Dicarbonsäuren, und Anhydriden, der aliphatischen Tricarbonsäuren, und Anhydriden, der aromatischen Dicarbonsäuren und Anhydriden, bevorzugt eine Verbindung ausgewählt aus der Gruppe bestehend aus Oxalsäure, Bernsteinsäure, Zitronensäure, Phthalsäure, Phthalsäureanhydrid und/oder
- einen aliphatischen C2-C8 Dialdehyd, bevorzugt Ethandial und/oder Glutaraldehyd.

Bevorzugt enthält das das amphiphiles Additiv eine Verbindung ausgewählt aus der Gruppe der aliphatischen Dicarbonsäuren, und Anhydriden, der aliphatischen Tricarbonsäuren, und Anhydriden, der aromatischen Dicarbonsäuren und Anhydriden, bevorzugt eine Verbindung ausgewählt aus der Gruppe bestehend aus Oxalsäure, Bernsteinsäure, Zitronensäure, Phthalsäure, Phthalsäureanhydrid und/oder wenigstens einen aliphatischen C2-C8 Dialdehyd, bevorzugt Ethandial und/oder Glutaraldehyd, enthält.

In einer bevorzugten Ausführungsform enthält die Schmelze kein zugefügtes, im Verhältnis zu Harnstoff und elementaren Schwefel, wie voranstehend beschriebenes amphiphiles Additiv. Die Abwesenheit eines Mischungsadditiv senkt die Kosten des fertigen Düngergranulates und vermeidet negative Einflüsse auf die Wirksamkeit des Düngergranulates bei der Aufnahme durch die Pflanzen.

Des Weiteren umfasst die Erfindung die Verwendung des erfindungsgemäßen, voranstehend beschriebenen Fließbett Granulators zur Herstellung eines Düngergranulates umfassend Harnstoff-Schwefel, Harnstoff, Ammoniumsulfat, UAS (Urea-Ammoniumsulfat), UAN (Urea-Ammoniumnitrat) und/oder Gemischen davon.

Des Weiteren wird die Erfindung anhand der folgenden Figuren näher erläutert. Die Figuren beschränken dabei nicht den Schutzumfang der Erfindung, sondern dienen nur der beispielhaften Erläuterung. Die Figuren sind nicht maßstabsgetreu.

Es zeigen:
Figur 1 einen schematischen Querschnitt durch die erfindungsgemäße Sprühdüse,
Figur 2 eine schematische Draufsicht der erfindungsgemäßen Sprühdüse und
Figur 3 einen weiteren schematischen Querschnitt der in der perforierten Platte angeordneten erfindungsgemäßen Sprühdüse.

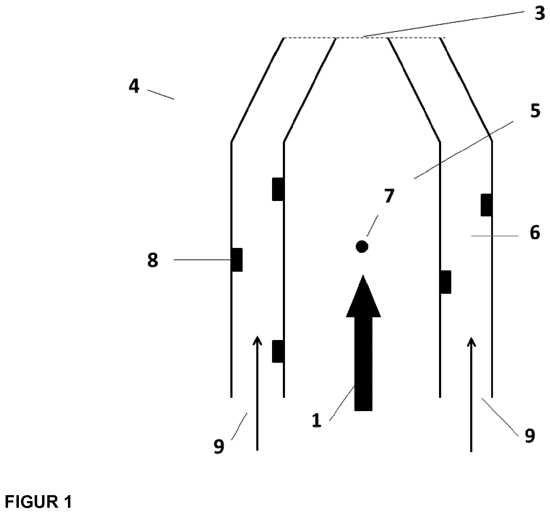

Figur 1 zeigt einen schematischen Querschnitt durch die erfindungsgemäße Sprühdüse (4) umfassend einen Förderkanal (5) und einen Atomisierungsgaskanal (6). Die Sprühdüse (4) ist dadurch gekennzeichnet, dass der Förderkanal (5) mindestens ein Trennstift (7), aufweist Der Atomisierungskanal (6) weist mindestens ein Verwirbelungselement (8) auf. Die Schmelze (1) wird im Bereich des Trennstiftes (7) aufgeteilt und bevorzugt turbulent verwirbelt. Diese Verwirbelung erhöht überraschenderweise die Homogenität der Schmelze (1). Das Atomisierungsgas (9) wird über den Atomisierungskanal (6) durch die Sprühdüse (1) geleitet.

Die im Atomisierungskanal (6) angebrachten Verwirbelungselemente (8) erhöhen die Turbulenz des durchgeleiteten Atomisierungsgases (9), beispielsweise Luft. Sollen sauerstoffempfindliche Granulate erzeugt werden, können anstatt Luft auch Gase/Gasgemische aus Edelgasen, insbesondere Argon, Stickstoff oder Kohlendioxid verwendet werden. Die Durchmischung von Schmelze (1) und Atomisierungsgas erfolgt außerhalb der Austrittsfläche (3) der Sprühdüse (4). Diese Durchmischung der Schmelze außerhalb der Sprühdüse (4) sorgt für ein besonders gleichmäßiges Partikelwachstum.

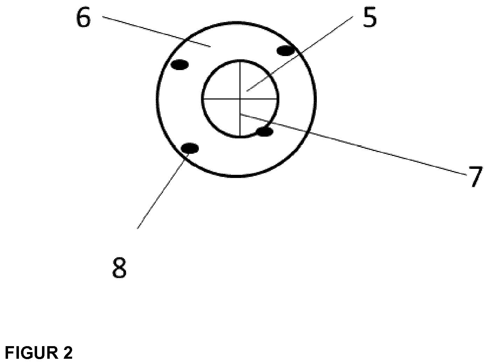

Figur 2 zeigt eine schematische Draufsicht der erfindungsgemäßen Sprühdüse (4) beschränkt auf den Atomisierungskanal (6) und Förderkanal (5). Die Trennstifte (7) sind überkreuzt angeordnet.

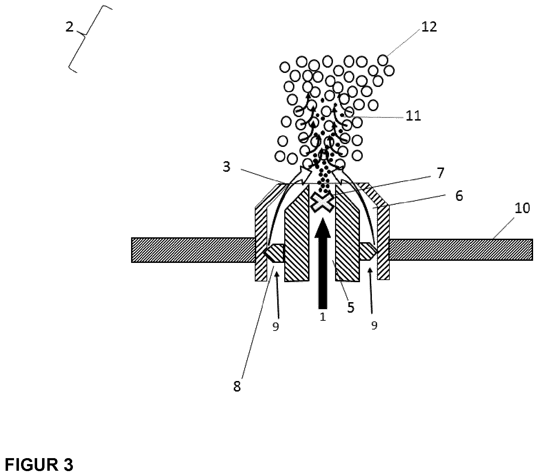

Figur 3 zeigt einen weiteren schematischen Querschnitt der in der perforierten Platte (10) angeordneten erfindungsgemäßen Sprühdüse (4). Die Sprühdüse umfasst einen Förderkanal (5) und einen Atomisierungsgaskanal (6). Der Förderkanal (5) enthält zwei sich überkreuzende Trennstifte (7), der Atomisierungskanal (6) enthält Verwirbelungselemente (8). Die Schmelze (1) und das Atomisierungsgas (9) vermischen sich außerhalb der planen Austrittsöffnung (3) und treffen dort als Mikrotröpfchen (11) auf die im nicht gezeigten Fließbett vorliegen Granulatpartikel (12). Die Granulatpartikel (12) wachsen durch die Anlagerung der Mikrotröpfchen (12) auf Ihre endgültige Größe an (nicht gezeigt) und werden anschließend aus dem Fließbett Granulator Innenraum (2) entfernt (nicht gezeigt).

### Bezugszeichenliste

- (1): Schmelze
- (2): Fließbett Granulator Innenraum
- (3): Austrittsfläche
- (4): Sprühdüse
- (5): Förderkanal
- (6): Atomisierungskanal
- (7): Trennstift
- (8): Verwirbelungselement
- (9): Atomisierungsgas
- (10): Perforierte Platte
- (11): Schmelztröpfchen
- (12): Granulatpartikel

## Patentansprüche

1. Sprühdüse (4) zur Herstellung eines Harnstoff Düngergranulats und/oder Harnstoff-Schwefel Düngergranulats mindestens umfassend einen Förderkanal (5) und einen Atomisierungsgaskanal (6) **dadurch gekennzeichnet, dass** der Förderkanal (5) mindestens einen Trennstift (7) aufweist, der als einzelner oder einfach oder mehrfach überkreuzender Steg ausgeführt ist, und der Atomisierungsgaskanal (6) mindestens ein Verwirbelungselement (8) aufweist, umfassend feste Elemente, die im Atomisierungsgaskanal (6) angebracht sind, wobei der Förderkanal (5) und der Atomisierungsgaskanal (6) plan zu einander eine gemeinsame Austrittsöffnung (3) bilden und wobei der Atomisierungsgaskanal (6) den Förderkanal (5) umgibt.

2. Fließbett Granulator (2) umfassend mindestens eine auf einer perforierten Platte (10) angeordnete Sprühdüse (4) nach Anspruch 1.

3. Verfahren zur Herstellung eines Harnstoff-Schwefel Düngers mindestens umfassend die Schritte:
- Bereitstellen einer Schmelze (1) enthaltend Harnstoff und elementaren Schwefel; und
- Einsprühen der Schmelze (1) und Atomisierungsgas (9) in einen Fließbett Granulator (3) mit/über eine(r) Sprühdüse (4); und
- Erhalten von Granulat (14) in dem Fließbett Granulator (3);
**dadurch gekennzeichnet, dass** die Sprühdüse (4) mindestens einen Förderkanal (5) und einen Atomisierungsgaskanal (6) mit den Merkmalen nach Anspruch 1 aufweist.

4. Verfahren nach Anspruch 3, **dadurch gekennzeichnet, dass** die Sprühdüse (4) im Temperaturbereich von 1°C bis 10°C, bevorzugt 2°C bis 5 °C über der Kristallisationstemperatur der Schmelze (2) temperiert wird.

5. Verfahren nach Anspruch 3 oder 4, **dadurch gekennzeichnet, dass** die Schmelze (2) über den Förderkanalkanal (5) mit einem Druck von 0,5 bar bis 7 bar eingeleitet wird und/oder mit einer Flussrate von 50 kg/h bis 600 kg/h eingeleitet wird.

6. Verfahren nach mindestens einem der Ansprüche 3 bis 5, **dadurch gekennzeichnet, dass** Atomisierungsgas über den Atomisierungskanal (6) mit einem Flussrate von 50 kg/h bis 400 kg/h eingeleitet wird und/oder mit einem Druck von 0,1 bar bis 2 bar eingeleitet wird.

7. Verfahren nach mindestens einem der Ansprüche 3 bis 6, **dadurch gekennzeichnet, dass** die Schmelze (1) durch kontinuierliche Mischung einer harnstoffhaltigen Schmelze und einer elementaren Schwefel haltigen Schmelze erhalten wird.

8. Verfahren nach mindestens einem der Ansprüche 3 bis 7, **dadurch gekennzeichnet, dass** das Granulat (14) 2 Gew.% bis 30 Gew.% Schwefel, bevorzugt 5 Gew.% bis 20 Gew.% Schwefel enthält.

9. Verfahren nach mindestens einem der Ansprüche 3 bis 8, **dadurch gekennzeichnet, dass** die Schmelze (1) ein im Verhältnis/Bezug zu Harnstoff und elementaren Schwefel amphiphiles Additiv enthält.

10. Verfahren nach Anspruch 9, **dadurch gekennzeichnet, dass** das amphiphiles Additiv anionische, kationische oder nichtionische Tenside, bevorzugt Salze und Ester von Fettsäuren, SDS, AOT, Lignin und/oder Ligninsulfonate und/oder Mischungen und/oder Derivate davon, umfasst.

11. Verfahren nach einem der Ansprüche 3 bis 10, **dadurch gekennzeichnet, dass** die Schmelze (1) kein zugefügtes, im Verhältnis/Bezug zu Harnstoff und elementaren Schwefel amphiphiles Additiv enthält.

12. Verfahren nach einem der Ansprüche 3 bis 11, **dadurch gekennzeichnet, dass** die Schmelze (1) einen Granulierhilfsstoff, bevorzugt Formaldehyd oder ein formaldehydfreies Granulieradditiv enthält.

13. Verfahren nach Anspruch 12, **dadurch gekennzeichnet, dass** das formaldehydfreie Granulieradditiv eine Kombination aus wenigstens einem Amino-Gruppen enthaltenden Polymer oder Oligomer und wenigstens einer funktionalisiertem Polyvinylverbindung, bevorzugt eine Kombination aus Polyethylenimin und Polyvinylalkohol, enthält.

14. Verfahren nach Anspruch 12 oder 13, **dadurch gekennzeichnet, dass** das formaldehydfreie Granulieradditiv mindestens enthält:
- eine Kombination aus wenigstens einem Amino-Gruppen enthaltenden Polymer oder Oligomer und wenigstens einer funktionalisierten Polyvinylverbindung enthält, bevorzugt eine Kombination aus Polyethylenimin und Polyvinylalkohol; und/oder
- eine Verbindung ausgewählt aus der Gruppe der aliphatischen Dicarbonsäuren, und Anhydriden, der aliphatischen Tricarbonsäuren, und Anhydriden, der aromatischen Dicarbonsäuren und Anhydriden, bevorzugt eine Verbindung ausgewählt aus der Gruppe bestehend aus Oxalsäure, Bernsteinsäure, Zitronensäure, Phthalsäure, Phthalsäureanhydrid; und/oder
- einen aliphatischen C₂-C₈ Dialdehyd, bevorzugt Ethandial und/oder Glutaraldehyd.

15. Verwendung des Fließbett Granulators nach Anspruch 2 zur Herstellung eines Düngergranulates umfassend Harnstoff-Schwefel, Harnstoff, Ammoniumsulfat, UAS (Urea-Ammoniumsulfat, UAN (Urea-Ammoniumnitrat) und/oder Gemische davon.

## Claims

1. Spray nozzle (4) for production of a urea fertilizer granules and/or urea-sulfur fertilizer granules at least comprising a conveying channel (5) and an atomizing gas channel (6), **characterized in that** the conveying channel (5) has at least one separating pin (7) which is designed as a single land or individually or multiply crossing lands, and the atomizing gas channel (6) has at least one swirl element (8) comprising fixed elements which are mounted in the atomizing gas channel (6), wherein the conveying channel (5) and the atomizing gas channel (6) are planar to one another and form a common exit opening (3) and wherein the atomizing gas channel (6) surrounds the conveying channel (5).

2. Fluidized bed granulator (2) comprising at least one spray nozzle (4) according to claim 1 disposed atop a perforated plate (10).

3. Process for the production of a urea-sulfur fertilizer comprising at least the steps of
- providing a melt (1) containing urea and elemental sulfur; and
- spraying the melt (1) and atomizing gas (9) into a fluidized bed granulator (3) with/via a spray nozzle (4); and
- obtaining granules (14) in the fluidized bed granulator (3);
**characterized in that** the spray nozzle (4) at least comprises a conveying channel (5) and an atomizing gas channel (6) having the features according to claim 1.

4. Process according to claim 3, **characterized in that** the spray nozzle (4) is maintained at a temperature in the temperature range from 1 °C to 10°C, preferably 2°C to 5 °C, above the crystallization temperature of the melt (2).

5. Process according to claim 3 or 4, **characterized in that** the melt (2) is introduced via the conveying channel (5) at a pressure of 0.5 bar to 7 bar and/or is introduced at a flow rate of 50 kg/h to 600 kg/h.

6. Process according to at least one of claims 3 to 5, **characterized in that** atomizing gas is introduced via the atomizing channel (6) at a flow rate of 50 kg/h to 400 kg/h and/or is introduced at a pressure of 0.1 bar to 2 bar.

7. Process according to at least one of claims 3 to 6, **characterized in that** the melt (1) is obtained by continuously mixing a urea-containing melt and an elemental sulfur-containing melt.

8. Process according to at least one of claims 3 to 7, **characterized in that** the granules (14) contain 2 wt.-% to 30 wt.-% sulfur, preferably 5 wt.-% to 20 wt.-% sulfur.

9. Process according to at least one of claims 3 to 8, **characterized in that** the melt (1) contains an additive which is amphiphilic with respect to urea and elemental sulfur.

10. Process according to claim 9, **characterized in that** the amphiphilic additive comprises anionic, cationic or nonionic surfactants, preferably salts and esters of fatty acids, SDS, AOT, lignin and/or lignosulfonates and/or mixtures and/or derivatives thereof.

11. Process according to one of claims 3 to 10, **characterized in that** the melt (1) does not contain an added additive which is amphiphilic with respect to urea and elemental sulfur.

12. Process according to one of claims 3 to 11, **characterized in that** the melt (1) contains a granulating auxiliary, preferably formaldehyde or a formaldehyde-free granulating additive.

13. Process according to claim 12, **characterized in that** the formaldehyde-free granulating additive contains a combination of at least one polymer or oligomer containing amino groups and at least one functionalized polyvinyl compound, preferably a combination of polyethyleneimine and polyvinyl alcohol.

14. Process according to claim 12 or 13, **characterized in that** the formaldehyde-free granulating additive contains at least
- a combination of at least one polymer or oligomer containing amino groups and at least one functionalized polyvinyl compound, preferably a combination of polyethyleneimine and polyvinyl alcohol; and/or
- a compound selected from the group of the aliphatic dicarboxylic acids and anhydrides, the aliphatic tricarboxylic acids and anhydrides, the aromatic dicarboxylic acids and anhydrides, preferably a compound selected from the group consisting of oxalic acid, succinic acid, citric acid, phthalic acid, phthalic anhydride; and/or
- an aliphatic C₂-C₈ dialdehyde, preferably ethanedial and/or glutaraldehyde.

15. Use of the fluidized bed granulator according to claim 2 for the production of a fertilizer granulate comprising urea-sulfur, urea, ammonium sulfate, UAS (urea-ammonium sulfate), UAN (urea-ammonium nitrate) and/or mixtures thereof.

## Revendications

1. Buse de pulvérisation (4) pour la fabrication des granulés d'engrais à base d'urée et/ou des granulés d'engrais à base d'urée et de soufre, comprenant au moins un canal de transport (5) et un canal de gaz d'atomisation (6), **caractérisée en ce que** le canal de transport (5) présente au moins une tige de séparation (7) qui est réalisée sous la forme d'une traverse individuelle ou d'une traverse se croisant une fois ou plusieurs fois, et le canal de gaz d'atomisation (6) présente au moins un élément de tourbillonnement (8), comprenant des éléments fixes, qui sont placés dans le canal de gaz d'atomisation (6), le canal de transport (5) et le canal de gaz d'atomisation (6) formant, dans le plan l'un par rapport à l'autre, une ouverture de sortie commune (3) et le canal de gaz d'atomisation (6) entourant le canal de transport (5).

2. Granulateur à lit fluidisé (2) comprenant au moins une buse de pulvérisation (4) selon la revendication 1 disposée sur une plaque perforée (10).

3. Procédé de fabrication d'un engrais urée-soufre comprenant au moins les étapes suivantes :
- Préparation d'une masse fondue (1) contenant de l'urée et du soufre élémentaire ; et
- Injection de la masse fondue (1) et du gaz d'atomisation (9) dans un granulateur à lit fluidisé (3) avec/via une buse de pulvérisation (4) ; et
- l'obtention des granulés (14) dans le granulateur à lit fluidisé (3) ;
**caractérisé en ce que** la buse de pulvérisation (4) comprend au moins un canal de transport (5) et un canal de gaz d'atomisation (6) ayant les caractéristiques selon la revendication 1.

4. Procédé selon la revendication 3, **caractérisé en ce que** la buse de pulvérisation (4) est maintenue en température dans une plage de température de 1°C à 10°C, de préférence de 2°C à 5°C, au-dessus de la température de cristallisation de la masse fondue (2).

5. Procédé selon la revendication 3 ou 4, **caractérisé en ce que** la masse fondue (2) est introduite par le canal de transport (5) à une pression de 0,5 bar à 7 bar et/ou est introduite à un débit de 50 kg/h à 600 kg/h.

6. Procédé selon au moins l'une des revendications 3 à 5, **caractérisé en ce que** du gaz d'atomisation est introduit via le canal d'atomisation (6) à un débit de 50 kg/h à 400 kg/h et/ou est introduit à une pression de 0,1 bar à 2 bars.

7. Procédé selon au moins l'une des revendications 3 à 6, **caractérisé en ce que** la masse fondue (1) est obtenue par mélange en continu d'une masse fondue contenant de l'urée et d'une masse fondue contenant du soufre élémentaire.

8. Procédé selon au moins l'une des revendications 3 à 7, **caractérisé en ce que** les granulés (14) contiennent de 2 % à 30 % en poids de soufre, de préférence de 5 % à 20 % en poids de soufre.

9. Procédé selon au moins l'une des revendications 3 à 8, **caractérisé en ce que** la masse fondue (1) contient un additif amphiphile en proportion/relation avec l'urée et le soufre élémentaire.

10. Procédé selon la revendication 9, **caractérisé en ce que** l'additif amphiphile comprend des tensioactifs anioniques, cationiques ou non ioniques, de préférence des sels et des esters d'acides gras, de SDS, d'AOT, de lignine et/ou de lignosulfonates et/ou des mélanges et/ou des dérivés de ceux-ci.

11. Procédé selon l'une quelconque des revendications 3 à 10, **caractérisé en ce que** la masse fondue (1) ne contient pas d'additif amphiphile ajouté en proportion/référence à l'urée et au soufre élémentaire.

12. Procédé selon l'une des revendications 3 à 11, **caractérisé en ce que** la masse fondue (1) contient un adjuvant de granulation, de préférence du formaldéhyde ou un additif de granulation exempt de formaldéhyde.

13. Procédé selon la revendication 12, **caractérisé en ce que** l'additif de granulation sans formaldéhyde contient une combinaison d'au moins un polymère ou oligomère contenant des groupes amino et d'au moins un composé polyvinylique fonctionnalisé, de préférence une combinaison de polyéthylèneimine et d'alcool polyvinylique.

14. Procédé selon la revendication 12 ou 13, **caractérisé en ce que** l'additif de granulation sans formaldéhyde contient au moins :
- une combinaison d'au moins un polymère ou oligomère contenant des groupes amino et d'au moins un composé polyvinylique fonctionnalisé, de préférence une combinaison de polyéthylèneimine et d'alcool polyvinylique ; et/ou
- un composé choisi dans le groupe des acides dicarboxyliques aliphatiques et des anhydrides, des acides tricarboxyliques aliphatiques et des anhydrides, des acides dicarboxyliques aromatiques et des anhydrides, de préférence un composé choisi dans le groupe constitué par l'acide oxalique, l'acide succinique, l'acide citrique, l'acide phtalique, l'anhydride phtalique ; et/ou
- un dialdéhyde aliphatiqueenC2-C8, de préférence l'éthanedial et/ou le glutaraldéhyde.

15. Utilisation du granulateur à lit fluidisé selon la revendication 2 pour la préparation des granulés d'engrais comprenant de l'urée-soufre, de l'urée, du sulfate d'ammonium, de l'UAS (sulfate d'urée-ammonium, UAN (nitrate d'urée-ammonium) et/ou des mélanges de ceux-ci.
